(19)

Europäisches
Patentamt
European
Patent Office
Office européen
des brevets

(11) **EP 4 644 978 A1**

(12) **EUROPEAN PATENT APPLICATION**
published in accordance with Art. 153(4) EPC

(43) Date of publication:
**05.11.2025 Bulletin 2025/45**

(21) Application number: **23911824.3**

(22) Date of filing: **18.12.2023**

(51) International Patent Classification (IPC):
*G02F 1/13* (2006.01)        *G02F 1/1334* (2006.01)
*G02F 1/137* (2006.01)        *G03B 21/60* (2014.01)

(52) Cooperative Patent Classification (CPC):
**G02F 1/13; G02F 1/1334; G02F 1/137; G03B 21/60**

(86) International application number:
**PCT/JP2023/045309**

(87) International publication number:
**WO 2024/143044 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 JP 2022212161**

(71) Applicant: **Toppan Holdings Inc.
Tokyo 110-0016 (JP)**

(72) Inventors:
• **YOSHIDA Tetsushi
Tokyo 110-0016 (JP)**
• **NODA Satoshi
Tokyo 110-0016 (JP)**
• **YASUHARA Toshiji
Tokyo 110-0016 (JP)**

(74) Representative: **TBK
Bavariaring 4-6
80336 München (DE)**

(54) **REFLECTION-TYPE PROJECTION SCREEN**

(57) A reflective projection screen includes a transparent substrate having a front surface to which a rear surface of a light control sheet is attached. The transparent substrate is thicker than the light control sheet, the polymer dispersed liquid crystal includes at least one dichroic dye, the reflective projection screen reversibly changes from a transparent state to a scattering state in response to a change in voltage applied between the transparent electrode layers, and when a reflectance of a first image reflecting surface that is a front surface of the light control sheet in the scattering state is Rs, a reflectance of a second image reflecting surface that is a rear surface of the transparent substrate is Rn, and a transmittance of the light control sheet in the scattering state is T, $Rd = T^2 \times Rn$ and $(Rs + Rd) / Rs \leq 1.3$ hold.

FIG.6

EP 4 644 978 A1

**Description**

[Technical Field]

The present disclosure relates to a reflective projection screen that changes light transmittance.

[Background Art]

A light control sheet includes a light control layer containing a liquid crystal composition dispersed in a transparent resin and a pair of transparent electrode layers sandwiching the light control layer. The orientation of the liquid crystal compound changes in response to changes in the driving voltage applied across the pair of transparent electrode layers. A change in the orientation of the liquid crystal compound causes the light control layer to switch between a transparent state in which it transmits light and a scattering state in which it scatters light. The light control sheet in the scattering state is used in a projection screen on which an image is projected (see, for example, PTL 1).

[Citation List]

[Patent Literature]

[PTL 1] JP 2019-184693 A

[Summary of the Invention]

[Technical Problem]

The rear surface of a light control sheet for a reflective projection screen is attached to the front surface of a transparent substrate such as a glass or resin substrate. In such case, the front surface of the light control sheet functions as a first image reflecting surface that reflects an image from the reflective projection screen toward an observer. On the other hand, the rear surface of the transparent substrate also functions as a second image reflecting surface based on the refractive index difference between the transparent substrate and an air layer. As a result, this reflective projection screen causes the observer to observe a double image resulting from the superimposition of the image from the first image reflecting surface and the image from the second image reflecting surface.

[Solution to Problem]

An aspect of a reflective projection screen includes: a light control sheet including two transparent electrode layers and a polymer dispersed liquid crystal located between the transparent electrode layers; and a transparent substrate having a front surface to which a rear surface of the light control sheet is attached. The transparent substrate is thicker than the light control sheet, the polymer dispersed liquid crystal includes at least one dichroic dye, and the reflective projection screen reversibly changes from a transparent state to a scattering state in response to a change in voltage applied between the transparent electrode layers. When a reflectance of a first image reflecting surface that is a front surface of the light control sheet in the scattering state is Rs, a reflectance of a second image reflecting surface that is a rear surface of the transparent substrate is Rn, and a transmittance of the light control sheet in the scattering state is T, $Rd = T^2 \times Rn$ and $(Rs + Rd) / Rs \leq 1.3$ hold.

[Brief Description of the Drawings]

Fig. 1 is a diagram showing a configuration of a reflective projection screen along with a projection device.
Fig. 2 is a cross-sectional view showing a cross-sectional configuration of the reflective projection screen.
Fig. 3 is a partial cross-section showing a cross-sectional configuration of a light control sheet.
Fig. 4 is a device layout showing how the reflective projection screen is evaluated.
Fig. 5 is a plan view showing an evaluation image of the reflective projection screen.
Fig. 6 is an operational view showing the optical action of the reflective projection screen.

[Description of the Embodiments]

[Reflective projection screen 10]

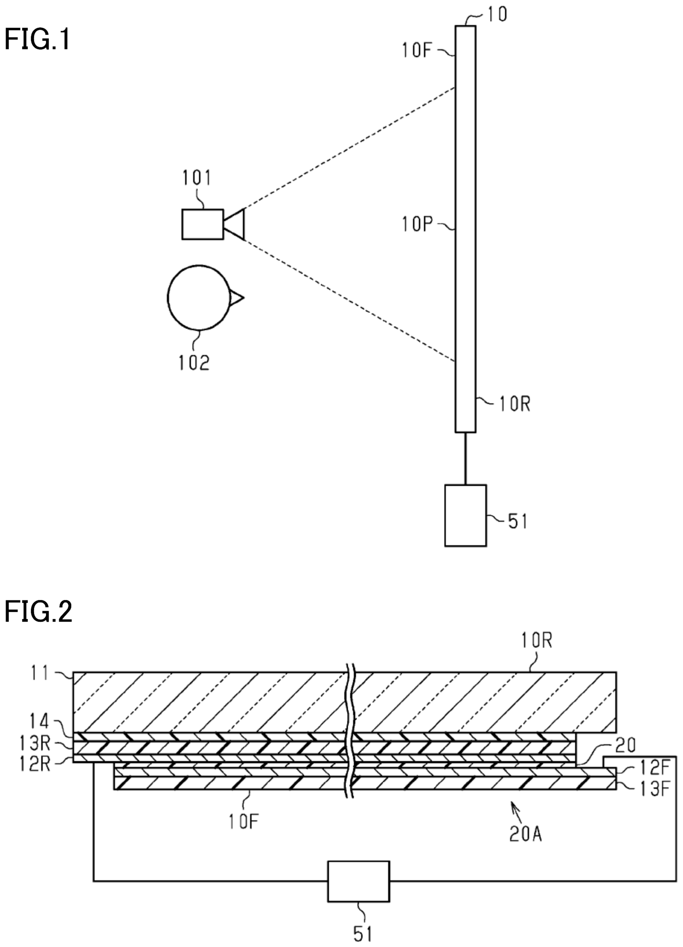

As shown in Fig. 1, a reflective projection screen 10 is connected to a driving device 51. The driving device 51 inputs a voltage signal to the reflective projection screen 10 to put the reflective projection screen 10 into a transparent state. The driving device 51 inputs another voltage signal to the reflective projection screen 10 to put the reflective projection screen 10 into a scattering state. The reflective projection screen 10 is reversibly changed from the transparent state to the scattering state by changing the voltage signal output by the driving device 51.

A front surface 10F of the reflective projection screen 10 faces a projection device 101. The front surface 10F of the reflective projection screen 10 is a first image reflecting surface. A rear surface 10R of the reflective projection screen 10 faces an air layer such as an indoor or outdoor environment. The rear surface 10R of the reflective projection screen 10 is a second image reflecting surface. The projection device 101 projects an image 10P onto the front surface 10F of the reflective projection screen 10 in the scattering state. An observer 102 observes the image 10P from the same side of the reflective projection screen 10 as the projection device 101.

As shown in Fig. 2, the reflective projection screen 10 includes a transparent substrate 11 and a light control sheet 20A. A front surface of the light control sheet 20A is the front surface 10F of the reflective projection screen 10. A rear surface of the transparent substrate 11 is the rear surface 10R of the reflective projection screen 10.

The transparent substrate 11 may be a transparent glass substrate or a transparent resin substrate. The transparent substrate 11 may be window glass of a moving body such as a vehicle or aircraft, window glass of a building, or a partition placed in a vehicle or indoors. The front surface of the transparent substrate 11 may be flat or curved.

The thickness of the transparent substrate 11 is sufficiently greater than that of the light control sheet 20A. The transparent substrate 11 may have a thickness of 1 mm or more and 20 mm or less. The light control layer 20A may have a thickness of 200 $\mu$m or more and 500 $\mu$m or less. The transparent substrate 11 may be a single-layer structure or a laminated structure. The transparent substrate 11 may be a float glass plate, a laminated glass, double glazing, or a tempered glass. When the transparent substrate 11 is a laminated structure, the structure forming the transparent substrate 11 has a refractive index of 1.4 or more and 1.6 or less so that the transparent substrate 11 can be regarded as one transparent structure.

The light control sheet 20A includes a light control layer 20, a first transparent electrode layer 12F, a second transparent electrode layer 12R, a first transparent support layer 13F, and a second transparent support layer 13R. The light control layer 20 is sandwiched between the first and second transparent electrode layers 12F and 12R, and is in contact with the first and second transparent electrode layers 12F and 12R. The first transparent support layer 13F supports the first transparent electrode layer 12F on the side of the first transparent electrode layer 12F opposite to that facing the light control layer 20. The second transparent support layer 13R supports the second transparent electrode layer 12R on the side of the second transparent electrode layer 12R opposite to that facing the light control layer 20. The second transparent support layer 13R is bonded to the transparent substrate 11 via a transparent adhesive layer 14.

The first and second transparent electrode layers 12F and 12R are both electrically conductive and transparent to visible light. A material of the first and second transparent electrode layers 12F and 12R may be a transparent inorganic oxide such as indium tin oxide, fluorine-doped tin oxide, tin oxide, or zinc oxide. A material of the first and second transparent electrode layers 12F and 12R may be carbon nanotubes, a conductive resin such as poly(3,4-ethylenedioxythiophene), a metal such as silver or a silver alloy, or a composite of metal and resin.

The first and second transparent support layers 13F and 13R are both substrates transparent to visible light. The first and second transparent support layers 13F and 13R may each have a single-layer structure or a multilayer structure. A material of the first and second transparent support layers 13F and 13R is a synthetic resin or an inorganic compound. The synthetic resin may be a polyester such as polyethylene terephthalate or polyethylene naphthalate, a polyacrylate such as polymethyl methacrylate, a polycarbonate, or a polyolefin. The inorganic compound may be a silicon compound such as silicon dioxide, silicon oxynitride, or silicon nitride.

[Light control layer 20]

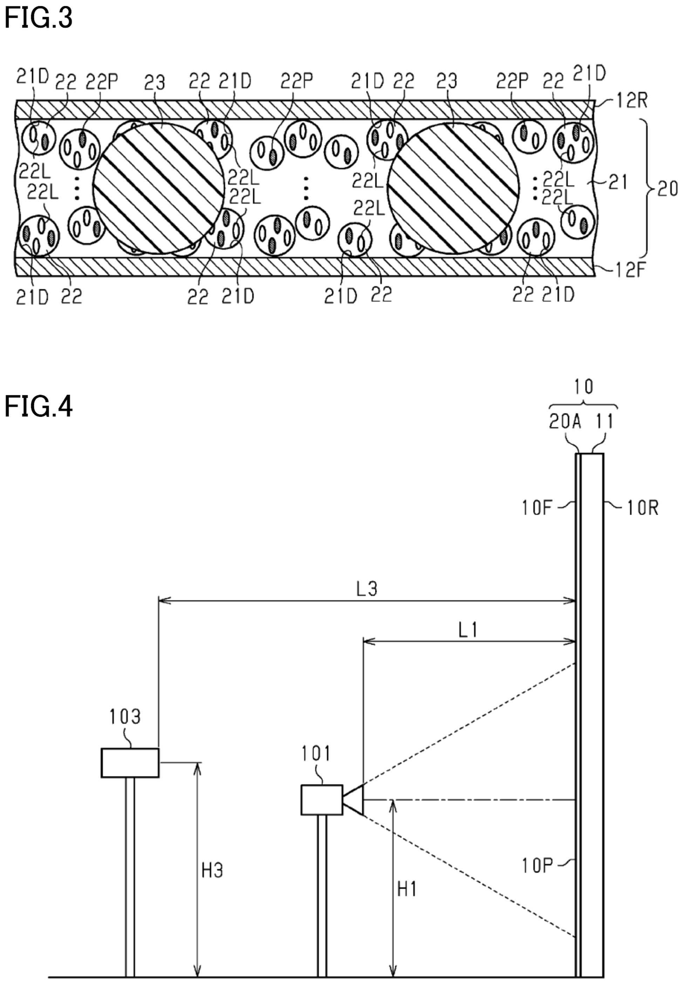

As shown in Fig. 3, the light control layer 20 includes a transparent polymer layer 21, a liquid crystal composition 22, and spacers 23. The light control layer 20 is a polymer dispersed liquid crystal.

The transparent polymer layer 21 is a cured product of a photopolymerizable compound. The transparent polymer layer 21 defines a plurality of voids 21D dispersed in the light control layer 20. The voids 21D may have a spherical, ellipsoidal, or irregular shape. The liquid crystal composition 22 is filled in the voids 21D. The proportion of the transparent polymer layer 21 to the light control layer 20 may be 30% by mass or more and 60% by mass or less. When the proportion of transparent polymer layer 21 is within this range, an appropriate density of the voids 21D required for an observer to observer an image can be obtained. It should be noted that the greater the proportion of the transparent polymer layer 21, the higher the mechanical strength of the light control layer 20. The smaller the proportion of the transparent polymer layer 21, the lower the voltage required to drive the light control sheet 20A.

The photopolymerizable compound for forming the transparent polymer layer 21 may be an ultraviolet-curable compound or an electron beam-curable compound. The photopolymerizable compound is compatible with the liquid crystal composition 22. When the photopolymerizable compound is an ultraviolet-curable compound, the dimensions of the voids 21D can be controlled more easily. The photopolymerizable compound may be a single polymerizable compound or a combination of two or more polymerizable compounds.

Examples of the ultraviolet-curable compound are acrylate compounds, methacrylate compounds, thiol compounds, styrene compounds, and oligomers of these compounds. The acrylate compounds include diacrylate compounds, triacrylate compounds, and tetraacrylate compounds. Examples of acrylate compounds are butyl ethyl acrylate, ethylhexyl acrylate, and cyclohexyl acrylate. The methacrylate compounds include dimethacrylate compounds, trimethacrylate compounds, and tetramethacrylate compounds. Examples of methacrylate compounds are N,N-dimethylaminoethyl methacrylate, phenoxyethyl methacrylate, methoxyethyl methacrylate, and tetrahydrofurfuryl methacrylate. Examples of thiol compounds are 1,3-propanedithiol and 1,6-hexanedithiol. Examples of styrene compounds are styrene and methylstyrene.

The liquid crystal composition 22 contains a liquid crystal compound 22L and a dichroic dye 22P. Note that the liquid crystal composition 22 may further contain a viscosity reducer, an antifoaming agent, an antioxidant, a weather resistance agent, or the like. Examples of the weather resistance agent include ultraviolet absorbers and photostabilizers. The proportion of the liquid crystal composition 22 to the light control layer 20 may be 40% by mass or more and 70% by mass or less. In a case where it is required to improve the transmittance of the light control sheet 20A in the transparent state and the haze of the light control sheet 20A in the scattering state, the proportion of the liquid crystal composition 22 is preferably 45% by mass or more and 55% by mass or less.

The liquid crystal compound 22L is a non-polymerizable compound. The dielectric constant of the liquid crystal compound 22L in its long axis direction is greater than the dielectric constant of the liquid crystal compound 22L in its short axis direction. In other words, the liquid crystal compound 22L has a positive dielectric anisotropy. The liquid crystal compound 22L may be at least one selected from the group consisting of Schiff base-based liquid crystal compounds, azo-based liquid crystal compounds, azoxy-based liquid crystal compounds, biphenyl-based liquid crystal compounds, terphenyl-based liquid crystal compounds, benzoate-based liquid crystal compounds, tolane-based liquid crystal compounds, pyrimidine-based liquid crystal compounds, pyridazine-based liquid crystal compounds, cyclohexanecarboxylic acid ester-based liquid crystal compounds, phenylcyclohexane-based liquid crystal compounds, biphenylcyclohexane-based liquid crystal compounds, cyano-based liquid crystal compounds, dicyanobenzene-based liquid crystal compounds, naphthalene-based liquid crystal compounds, dioxane-based liquid crystal compounds, and fluorine-based liquid crystal compounds. The liquid crystal compound 22L may be a single liquid crystal compound or a combination of two or more liquid crystal compounds.

The dichroic dye 22P has an elongated molecular shape, and its molecules have a greater absorbance in the visible range in their long axis direction than in their short axis direction. The dichroic dye 22P exhibits a predetermined color when its long axis direction is substantially perpendicular to the direction of incidence of light. The color exhibited by the dichroic dye 22P is, for example, black or a color close to black. The dichroic dye 22P is driven by a guest-host system using the liquid crystal compound 22L as the host to exhibit a color.

The dichroic dye 22P may be at least one selected from the group consisting of polyiodides, azo-based compounds, anthraquinone-based compounds, naphthoquinone-based compounds, azomethine-based compounds, tetrazine-based compounds, quinophthalone-based compounds, merocyanine-based compounds, perylene-based compounds, and dioxazine-based compounds. The dichroic dye 22P may be a single dye or a combination of two or more dyes. To improve the lightfastness of the dichroic dye and the dichroic ratio, the dichroic dye 22P is preferably at least one selected from the group consisting of azo-based compounds and anthraquinone-based compounds, and more preferably it is an azo-based compound.

The proportion of the dichroic dye 22P to the light control layer 20 may be 0.5% by mass or more and 10% by mass or less. The proportion of the dichroic dye 22P to the light control layer 20 may be 1% by mass or more and 5% by mass or less. When the proportion of the dichroic dye 22P is 0.5% by mass or more, in the opaque state, the coloration can be clearly recognized and the light transmittance can be sufficiently reduced. When further suppression of blur caused by the image 10P being a double image is required, the proportion of the dichroic dye 22P is more preferably 2.0% by mass or more. When the proportion of the dichroic dye 22P is 10% by mass or less, precipitation of aggregated particles of the dichroic dye 22P can be suppressed. When it is required to suppress aggregation of the dichroic dye 22P, the proportion of the dichroic dye 22P is preferably 5% by mass or less, and more preferably 4.0% by mass or less.

The spacers 23 are dispersed across the transparent polymer layer 21. The spacers 23 make the thickness of the light control layer 20 uniform because each spacer 23 determines the thickness of the light control layer 20 in its vicinity. The spacers 23 may be bead spacers or photospacers formed by exposing and developing a photoresist. The spacers 23 can be colorless or colored as long as they are transparent to light. The color exhibited by colored transparent spacers 23 is preferably the same as that of the dichroic dye 22P.

The light control layer 20 may have a thickness of 15 $\mu$m or more and less than 30 $\mu$m. The thickness of the light control layer 20 approximately matches the size of the spacers 23. The thickness of the light control layer 20 can be controlled by changing the mean particle size of the spacers 23. The mean particle size of the spacers 23, in terms of median diameter D50, may be 15 $\mu$m or more and less than 30 $\mu$m.

The light control sheet 20A may also include an alignment layer between the first transparent electrode layer 12F and the light control layer 20. The light control sheet 20A may also include an alignment layer between the second transparent electrode layer 12R and the light control layer 20. The light control sheet 20A may be of the reversed drive type. The light control sheet 20A may be of the either of the normal drive type.

A light control sheet 20A of the reversed drive type changes from the transparent state to the scattering state when a voltage is applied across the first and second transparent electrode layers 12F and 12R. When the voltage application is stopped, the light control sheet 20A of the reversed drive type returns from the scattering state to the transparent state due to the orientation regulation force applied by the alignment layer. A light control sheet 20A of the normal drive type changes from the scattering state to the transparent state when a voltage is applied across the first and second transparent electrode layers 12F and 12R. When the voltage application is stopped, the light control sheet 20A of the normal drive type returns from the transparent state to the scattering state.

[Optical characteristics]

A reflectance Rs of the first image reflecting surface of the reflective projection screen 10, a reflectance Rn of the second image reflecting surface of the reflective projection screen 10, a transmittance T of the light control sheet 20A, and a screen rear surface reflectance Rd satisfy the following optical conditions.

A double image evaluation value is expressed as (Rs + Rd) / Rs, where Rs is the reflectance of the first image reflecting surface, T is the transmittance of the light control sheet 20A, and Rd is the screen rear surface reflectance.

$$\text{(Optical conditions)} \ Rd = T^2 \times Rn, \ (Rs + Rd) / Rs \leq 1.3$$

The first image reflecting surface is the front surface 10F of the reflective projection sheet 10 and also the front surface of the light control sheet 20A. The first image reflecting surface reflects an image from the reflective projection screen 10 toward an observer 102. The second image reflecting surface is the rear surface 10R of the reflective projection screen 10 and also the rear surface of the transparent substrate 11. The second image reflecting surface reflects an image toward the observer 102 based on the refractive index difference between the transparent substrate 11 and the air layer.

The reflectance Rs of the first image reflecting surface is the total luminous reflectance in the visible range of the front surface 10F, and is obtained from the reflective projection screen 10 having the light control sheet 20A in the scattering state colored by a dichroic dye. The reflectance Rs of the first image reflecting surface is obtained by attaching a light-shielding sheet to the rear surface 10R of the reflective projection screen 10 to prevent reflection from the rear surface 10R, and measuring the total luminous reflectance of the first image reflecting surface of the reflective projection screen 10 in that state.

The reflectance Rn of the second image reflecting surface is the reflectance of the rear surface of the transparent substrate 11 of light incident from the front surface of the transparent substrate 11. The reflectance Rn of the second image reflecting surface is obtained from the reflective projection screen 10 having the light control sheet 20A in the scattering state colored by a dichroic dye. The reflectance Rn of the second image reflecting surface is calculated from a screen front surface reflectance R (= Rs + Rd), which is the reflectance at the front surface 10F of the reflective projection screen 10 with the light control sheet 20A in the scattering state, the reflectance of the first image reflecting surface being Rs, and the transmittance of the light control sheet 20A being T.

The transmittance T of the light control sheet 20A is the total light transmittance in the visible range of the light control sheet 20A itself, and is obtained from the light control sheet 20A itself in the scattering state colored by the dichroic dye.

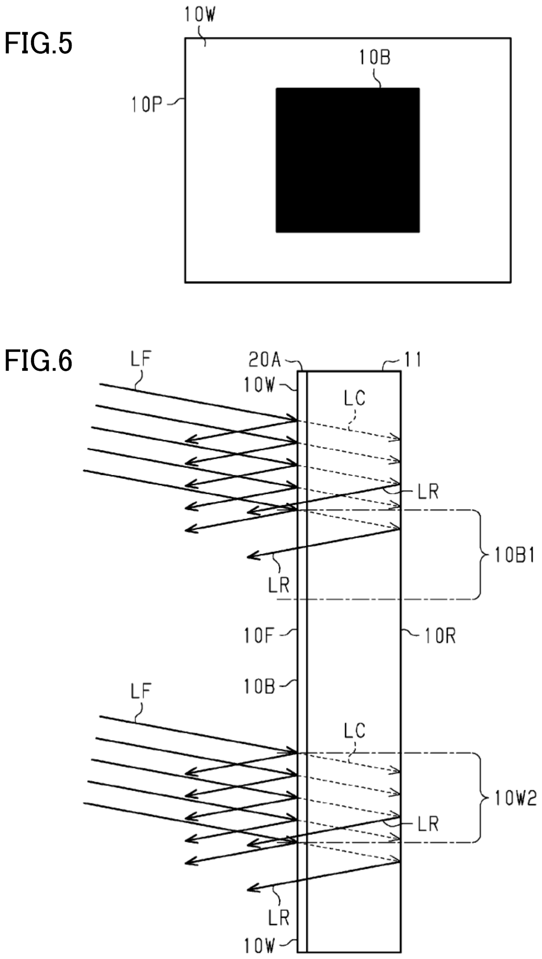

When a white area 10W (see Fig. 5) and a black area 10B (see Fig. 5) adjacent to each other are formed on the front surface 10F of the reflective projection screen 10, (i) the reflectance of the part of the white area 10W away from the black area 10B is the screen front surface reflectance R, (ii) the reflectance of the part of the black area 10B close to the white area 10W is the screen rear surface reflectance Rd, and (iii) the reflectance of the part of the white area 10W close to the black area 10B is the reflectance Rs of the first image reflecting surface.

The screen front surface reflectance R is the reflectance of the reflective projection screen 10 itself, and is expressed as the sum of the reflectance Rs of the first image reflecting surface and the screen rear surface reflectance Rd (R = Rs + Rd). The screen front surface reflectance R combines the degree to which light incident on the front surface 10F is reflected by the front surface 10F (Rs), and the degree to which light incident on the front surface 10F is reflected by the rear surface 10R after passing through the light control sheet 20A and the transparent substrate 11, and then passing through the transparent substrate 11 and the light control sheet 20A again (Rd).

The screen rear surface reflectance Rd indicates the degree to which light incident on the white area 10W is reflected by the rear surface 10R after passing through the light control sheet 20A and the transparent substrate 11, and then passing through the transparent substrate 11 and the light control sheet 20A toward the black area 10B.

[Examples]

The light control sheet 20A of Example 1 was obtained using the materials, composition, and method described below.

First, a mixture of nematic liquid crystal compounds having positive dielectric anisotropy and mainly composed of a cyano-based liquid crystal compound and a fluorine-based liquid crystal compound was used as the liquid crystal compound 22L. A mixture of a multifunctional acrylate, a multifunctional methacrylate, a monofunctional acrylate, and a urethane acrylate as used as the photopolymerizable compound for forming the transparent polymer layer 21. A black mixed dye made of an azo-based compound and an anthraquinone-based compound was used as the dichroic dye 22P. The liquid crystal composition 22, the photopolymerizable compound, a polymerization initiator, the spacers 23, and the dichroic dye 22P were mixed together to obtain a coating solution for forming the light control layer 20.

The photopolymerizable compound was mixed into the coating solution so that the proportion of the photopolymerizable compound to the coating solution is 52% by mass. Further, the dichroic dye 22P was mixed into the coating solution so that the proportion of the dichroic dye 22P to the coating solution is 2.5% by mass.

Next, an indium tin oxide film having a thickness of 100 nm was used as each of the first and second transparent electrode layers 12F and 12R. A polyethylene terephthalate film having a thickness of 125 μm was used as each of the first and second transparent support layers 13F and 13R.

The coating solution was applied to the first transparent electrode layer 12F laminated on the first transparent support layer 13F, and a coating film made of the coating solution is sandwiched between the second transparent electrode layer 12R laminated on the second transparent support layer 13R and the first transparent electrode layer 12F, thereby forming a laminate. The entire laminate was exposed to ultraviolet light having a central wavelength of 360 nm to cause phase separation into the transparent polymer layer 21 made of the photopolymerizable compound and the liquid crystal composition 22. This resulted in the light control sheet 20A having a light control layer 20 with a thickness of 20 μm. A float glass plate having a thickness of 3 mm was used as the transparent substrate 11. The light control sheet 20A was bonded to the transparent substrate 11 using the transparent adhesive layer 14 to obtain the reflective projection screen 10.

The light control sheet 20A and the reflective projection screen 10 of Example 2 were obtained in the same manner as in Example 1, except that a silver ink layer having a thickness of 50 nm was used as each of the first and second transparent electrode layers 12F and 12R. The silver ink layer is formed by applying an ink in which silver wires are dispersed.

The light control sheet 20A and the reflective projection screen 10 of the comparative example were obtained in the same manner as in Example 1, except that the dichroic dye 22P was removed from the coating solution.

[Evaluation]

Using the light control sheet 20A and transparent substrate 11 of each of Examples 1 and 2 and the comparative example, the total light reflectance and total light transmittance of the light control sheet 20A in the scattering state, and the rear surface reflectance of the transparent substrate 11 were measured. In addition, the contrast and the double image visibility were evaluated using the reflective projection screen 10 of each of Examples 1 and 2 and the comparative example.

Table 1 shows the reflectance Rs of the first image reflecting surface, which is the total light reflectance of the light control sheet 20A; the reflectance Rn of the second image reflecting surface, which is the rear surface reflectance of the transparent substrate 11; the transmittance T, which is the total light transmittance of the light control sheet 20A; and the screen rear surface reflectance Rd. The reflectance Rs of the first image reflecting surface was measured by performing a method conforming to JIS K 7361-1 on the front surface 10F of a sample obtained by attaching a light-shielding sheet to the rear surface 10R of the reflective projection screen 10. The transmittance T of the light control sheet 20A and the screen front surface reflectance R were measured using a method conforming to JIS K 7361-1. The reflectance Rn of the second image reflecting surface was calculated using the screen front surface reflectance R, the reflectance Rs of the first image reflecting surface, and the transmittance T of the light control sheet 20A.

As shown in Fig. 4, the contrast and double image visibility were evaluated using the projection device 101 and a luminance meter 103. A height H1 of the projection device 101 was set to 780 mm, and a distance L1 between the projection device 101 and the front surface 10F of the reflective projection screen 10 was set to 565 mm. A height H3 of the luminance meter 103 was set to 1180 mm, and a distance L3 between the luminance meter 103 and the front surface 10F of the reflective projection screen 10 was set to 1140 mm. A dark condition ranging from 6 lx to 30 lx and a bright condition ranging from 250 lx to 350 lx were set for the illuminance of the space in which the reflective projection screen 10 was placed.

As shown in Fig. 5, an image 10P displaying the white area 10W and the black area 10B was used to evaluate the contrast and double image visibility. The black area 10B is a rectangular image that is entirely colored black. The white area 10W is a rectangular frame image that encloses the entire black area 10B. The black area 10B is surrounded by the white area 10W. The black area 10B is projected onto the front surface 10F of the reflective projection screen 10 as a rectangular frame image measuring 5 cm x 5 cm. The white area 10W is irradiated with straight light rays from the projection device 101 on the front surface 10F of the reflective projection screen 10. The black area 10B is not irradiated with straight light rays from the projection device 101 on the front surface 10F of the reflective projection screen 10. Each straight light ray travels at an angle of within $\pm 2.5°$ with respect to the optical axis of parallel light emitted from the projection device 101 along the normal direction of the front surface 10F.

The contrast was obtained as the ratio of the luminance of the white area 10W to the luminance of the black area 10B measured using the luminance meter 103. The measurement with the luminance meter 103 was carried out by setting a circular measurement range with a diameter of 3 cm and calculating the mean of the luminance values at measurement points included in the circle as the measurement value. The luminance of the black area 10B was calculated by aligning the geometric center of the black area 10B with the center of the circular measurement range, and obtaining the mean of the measurement range at the center of the black area 10B as the measured luminance. CS-1000 (manufactured by KONICA MINOLTA, INC.) was used as the luminance meter.

The illuminance of the space in which the projection device 101 was placed is 6 lx under the dark condition. The illuminance of the space in which the reflective projection screen 10 was placed was 23 lx under the dark condition due to the projection of the image 10P. The reflective projection screen 10 was placed in a space that is almost unaffected by environmental light. LX-204 (manufactured by CUSTOM) was used as the illuminometer. The double image visibility was obtained by visually observing the image 10P displayed on the front surface 10F of the reflective projection screen 10. In Table 1, a sample was rated "good" when level at which the image 10P did not appear double, and was rated "poor" when the image 10P appeared double.

[Table 1]

|  | Ex. 1 | Ex. 2 | Comp. Ex. |
|---|---|---|---|
| Reflectance Rs (%) | 0.041 | 0.057 | 0.063 |
| Reflectance Rn (%) | 0.074 | 0.074 | 0.074 |
| Transmittance T (%) | 0.062 | 0.034 | 0.708 |
| Reflectance Rd ($T^2$ * Rn) | 0.0003 | 0.0001 | 0.0373 |
| (Rs + Rd) / Rs | 1.007 | 1.002 | 1.719 |
| Double image evaluation | Good | Good | Poor |

As shown in Table 1, the comparative example has a high reflectance Rs of 0.06 or greater. On the other hand, the reflectance Rs of Examples 1 and 2 is below 0.06 due to factors such as absorption by the dichroic dye 22P. The comparative example has a high transmittance T of 0.7 or greater. On the other hand, Example 1 has a low transmittance T of 0.1 or less, and Example 2 has an even lower transmittance T of less than 0.05.

The double image evaluation values of Example 1 and Example 2 are both 1.3 or less. On the other hand, the double image evaluation value of the comparative example is 1.7, which is greater than 1.3. In the evaluation of double image visibility in Examples 1 and 2, no double image was observed, whereas a double image was observed in the comparative example. The double image evaluation value of 1.3 is an intermediate value between the values of Example 1 and the comparative example. The double image evaluation value of 1.3 is also a boundary value corresponding to the luminance ratio for limit visibility at which the effect of suppressing a double image can be obtained.

The contrast of Example 1 under the dark condition was 1.6 or greater and 3.5 or less, and a tendency was observed that the contrast increased as the illuminance of the space decreased. The contrast of Example 1 under the bright condition was 1.6 or greater and 3.0 or less, and again a tendency was observed that the contrast increased as the illuminance of the space decreased. The contrast of Example 2 was higher than that of Example 1 under both the dark and bright conditions. On the other hand, the contrast of the comparative example under the dark condition was 1.5 or greater and 2.0 or less, which shows that the contrast was lower than that of Example 1 under the same space illuminance condition. In addition, the contrast of the comparative example under the bright condition was 1.5 or greater and 1.8 or less, which again shows that the contrast was lower than that of Example 1 under the same space illuminance condition.

[Operation]

As shown in Fig. 6, the front surface 10F of the reflective projection screen 10 is the front surface of the light control sheet 20A. The front surface of the light control sheet 20A functions as the first image reflecting surface that reflects an image from the reflective projection screen 10 toward the observer 102. On the other hand, the rear surface 10R of the reflective projection screen 10 is the rear surface of the transparent substrate 11. The rear surface of the transparent substrate 11 functions as the second image reflecting surface based on the refractive index difference between the transparent substrate 11 and the air layer.

As shown in the upper part of Fig. 6, visible light LF from the projection device 101 is incident on a portion of the front surface 10F of the reflective projection screen 10 that forms the white area 10W. The part of the visible light LF reflected by the light control sheet 20A is observed by the observer 102 as the white area 10W. On the other hand, the part of the visible light LF that is transmitted through the light control sheet 20A and the transparent substrate 11 (transmitted light LC) is reflected by the rear surface 10R of the reflective projection screen 10 and is incident on the light control sheet 20A from the rear surface of the light control sheet 20A. The transmitted light LR that has passed through the light control sheet 20A appears in the part of the white area 10W located on the upper side of Fig. 6. As a result, (i) in the part of the white area 10W away from the black area 10B, strong light corresponding to the sum of the reflectance Rs of the first image reflecting surface and the screen rear surface reflectance Rd (Rs + Rd = R) appears.

On the other hand, the transmitted light LR that has passed through the light control sheet 20A also appears in a part 10B1 of the black area 10B that is close to the white area 10W. In other words, (ii) in the part of the black area 10B close to the white area 10W, the light for forming the black area 10B and light corresponding to the screen rear surface reflectance Rd appear. When a part of the visible light LF for forming the white area 10W is strongly observed as the transmitted light LR, the boundary between the white and black areas 10W and 10B becomes blurred, and the image 10P appears double.

In this regard, when the reflective projection screen 10 satisfies the above-described optical conditions, the screen rear surface reflectance Rd is sufficiently suppressed relative to the reflectance Rs of the first image reflecting surface. Therefore, (ii) in the part 10B1 of the black area 10B close to the white area 10W, the observer is less likely to observe the transmitted light LR compared to the strong light corresponding to the sum of the reflectance Rs of the first image reflecting surface and the screen rear surface reflectance Rd. This suppresses the visibility of a double image caused by the transmitted light LR.

As shown in the lower part of Fig. 6, (iii) a part 10W2 of the white area 10W that is close to the black area 10B does not receive the transmitted light LR from the black area 10B, and appears darker by the amount of transmitted light LR than (i) a part of the white area 10W that is away from the black area 10B. In other words, (iii) in the part 10W2 of the white area 10W that is close to the black area 10B, the observer observes only the light corresponding to the reflectance Rs of the first image reflecting surface. Due to this difference between (iii) the part 10W2 of the white area 10W that is close to the black area 10B and (i) the part of the white area 10W that is located below the part 10W2 and away from the black area 10B, and in which the transmitted light LR appears, the image 10P appears double.

Also in this regard, when the reflective projection screen 10 satisfies the above-described optical conditions, the screen rear surface reflectance Rd is sufficiently suppressed relative to the reflectance Rs of the first image reflecting surface, and therefore the visibility of a double image caused by the transmitted light LR is suppressed.

[Effects]

According to the above embodiment, the advantageous effects described below can be achieved.

(1) Since the reflective projection screen 10 satisfies the above optical conditions, it is possible to prevent the image 10P from being displayed as a double image.
(2) When the transmittance T of the light control sheet 20A is 0.1 or less as in Example 1, the effectiveness of obtaining an effect similar to (1) can be enhanced.
(3) When the reflectance Rs of the front surface of the light control sheet 20A is 0.05 or more and the transmittance T of the light control sheet 20A is 0.05 or less as in Example 2, it is possible to obtain an effect similar to (1) while further increasing the contrast.
(4) When the first and second transparent electrode layers 12F and 12R are silver ink layers as in Example 2, it is easier to increase the reflectance Rs and decrease the transmittance T than when they are transparent inorganic oxide layers. Accordingly, it is also possible to enhance the effectiveness of obtaining an effect similar to (3).

The embodiment described above may be modified and implemented as follows.

- The silver ink layer can be altered to a deposited silver layer formed by sputtering or vacuum deposition. A silver electrode layer such as a silver ink layer or a deposited silver layer facilitates obtaining an effect similar to (3) above.

- The dichroic dye 22P is not limited to a black mixed dye, but may be a single black dye, a blue mixed dye, or a single blue dye. The type and composition ratio of the dichroic dye 22P can be changed as appropriate as long as the above optical conditions are satisfied.

- The drive type of the light control sheet 20A may be either reversed or normal as long as $(Rs + Rd) / Rs \leq 1.3$ holds.

## Claims

1. A reflective projection screen comprising:

    a light control sheet including two transparent electrode layers and a polymer dispersed liquid crystal located between the transparent electrode layers; and
    a transparent substrate having a front surface to which a rear surface of the light control sheet is attached,
    wherein the transparent substrate is thicker than the light control sheet,
    the polymer dispersed liquid crystal includes at least one dichroic dye,
    the reflective projection screen reversibly changes from a transparent state to a scattering state in response to a change in voltage applied between the transparent electrode layers, and
    when a reflectance of a first image reflecting surface that is a front surface of the light control sheet in the scattering state is Rs, a reflectance of a second image reflecting surface that is a rear surface of the transparent substrate is Rn, and a transmittance of the light control sheet in the scattering state is T, $Rd = T^2 \times Rn$ and $(Rs + Rd) / Rs \leq 1.3$ hold.

2. The reflective projection screen according to claim 1, wherein the light control sheet in the scattering state has a transmittance of 0.1 or less.

3. The reflective projection screen according to claim 2, wherein the light control sheet in the scattering state has a transmittance of 0.05 or less.

4. The reflective projection screen according to claim 3, wherein the first image reflecting surface in the scattering state has a reflectance of 0.05 or more.

5. The reflective projection screen according to claim 3 or 4, wherein the dichroic dye is a black mixed dye, and the transparent electrode layers are silver electrode layers.

FIG.1

FIG.2

FIG.3

FIG.4

FIG.5

FIG.6

## INTERNATIONAL SEARCH REPORT

International application No.

**PCT/JP2023/045309**

### A. CLASSIFICATION OF SUBJECT MATTER

*G02F 1/13*(2006.01)i; *G02F 1/1334*(2006.01)i; *G02F 1/137*(2006.01)i; *G03B 21/60*(2014.01)i
FI:    G02F1/13 505; G02F1/1334; G03B21/60; G02F1/137 500

According to International Patent Classification (IPC) or to both national classification and IPC

### B. FIELDS SEARCHED

Minimum documentation searched (classification system followed by classification symbols)

G02F1/13; G02F1/1334; G02F1/137; G03B21/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2020-86085 A (TOPPAN PRINTING CO., LTD.) 04 June 2020 (2020-06-04) paragraphs [0001]-[0007], [0018]-[0043], fig. 1-4 | 1-5 |
| Y | JP 2004-347972 A (ASAHI GLASS COMPANY, LIMITED) 09 December 2004 (2004-12-09) paragraphs [0010]-[0062], fig. 1 | 1-5 |
| A | WO 2021/182332 A1 (FUJIFILM CORPORATION) 16 September 2021 (2021-09-16) entire text, all drawings | 1-5 |
| A | WO 2020/017591 A1 (DAI NIPPON PRINTING CO., LTD.) 23 January 2020 (2020-01-23) entire text, all drawings | 1-5 |

☐ Further documents are listed in the continuation of Box C.     ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **16 January 2024** | **30 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/045309**

| Patent document cited in search report | | | Publication date (day/month/year) | Patent family member(s) | | | Publication date (day/month/year) |
|---|---|---|---|---|---|---|---|
| JP | 2020-86085 | A | 04 June 2020 | (Family: none) | | | |
| JP | 2004-347972 | A | 09 December 2004 | (Family: none) | | | |
| WO | 2021/182332 | A1 | 16 September 2021 | US | 2023/0037337 | A1 | |
| | | | | entire text, all drawings | | | |
| | | | | CN | 115298608 | A | |
| WO | 2020/017591 | A1 | 23 January 2020 | US | 2021/0274137 | A1 | |
| | | | | entire text, all drawings | | | |
| | | | | EP | 3825765 | A1 | |
| | | | | CN | 112334831 | A | |

Form PCT/ISA/210 (patent family annex) (July 2022)

**EP 4 644 978 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019184693 A